# EUROPEAN PATENT APPLICATION

(11) **EP 1 976 279 A1**
(43) Date of publication of application: **01.10.2008**
(21) Application number: 07021247.7
(22) Date of filing: 31.10.2007
(51) Int. Cl.: H04N 5/445, H04N 5/265, H04N 5/45

(54) **Video compositing device and video output device**

(30) Priority: 28.03.2007 JP 2007083995
(71) Applicant: Seiko Epson Corporation, Shinjuku-ku Tokyo 163-0811 (JP)
(72) Inventor: Tamura, Akihiko, Nagano 392-8502 (JP)
(74) Representative: HOFFMANN EITLE

(57) **Abstract**

A video compositing device includes: first video input means for inputting a first video; second video input means for inputting a second video; parameter input means for inputting a parameter indicating a relative positional relationship between the first video input by the first video input means and the second video input by the second video input means when the first and second videos are composited; video compositing means for compositing the first and second videos, in units of pixels, in accordance with the parameter input by the parameter input means, to generate a composite video; and output means for outputting a composite video generated by the video compositing means.

## Description

### BACKGROUND

Technical Field

The present invention relates to a video compositing device and a video output device which composite videos.

Related Art

In video output devices such as televisions, displays, and projectors, some well-known techniques for displaying a video overlapped on another video are employed, such as OSD (On Screen Display). For example, WO 2004/090860 discloses a video compositing circuit which composites videos.

### SUMMARY

The video compositing circuit according to WO 2004/090860 processes videos in unit of lines. In brief, there is a necessity to include line buffers inside the circuit.

Compared with this circuit, the present invention provides a technique for making composite videos using reduced memory.

According to an aspect of the invention, to achieve the above object, there is provided a video compositing device including: first video input means for inputting a first video; second video input means for inputting a second video; parameter input means for inputting a parameter indicating a relative positional relationship between the first video input by the first video input means and the second video input by the second video input means when the first and second videos are composited; video compositing means for compositing the first and second videos, in units of pixels, in accordance with the parameter input by the parameter input means, to generate a composite video; and output means for outputting a composite video generated by the video compositing means.

According to this video compositing device, videos are composited in units of pixels.

In this case, the video compositing device may further include filter processing means for performing a filter processing on the second video, wherein the video compositing means is configured to composite the first video and the second video which has been subjected to the filter processing by the filter processing means.

According to this video compositing device, a filter processing is performed on a video before the video is composited.

In this case, the second video may be expressed in a data format which requires a smaller data volume than a data format of the first video, and the video compositing device may further includes: conversion information storage means for storing conversion information for converting the data format of the second video into the data format of the first video; and conversion means for converting the data format of the second video into the same data format as the data format of the first video, based on the conversion information stored in the conversion information storage means.

According to this video compositing device, the second video is expressed in a data format which requires a smaller data volume than that of the first video.

In still another mode, the video compositing device may further include pixel storage means for storing data of at least five pixels of the video input by the second video input means, including a processing target pixel as a processing target and adjacent pixels vertically and horizontally adjacent to the processing target pixel, wherein the filter processing means is configured to perform the filter processing in two directions, horizontal and vertical to the processing target pixel, using the data stored in the storage unit.

According to this video compositing device, a filter processing is carried out on the second video in each of horizontal and vertical directions

According to another aspect of the invention, there is provided a video output device, including: the video compositing device described above; first video storage means for storing the first video; and second video storage means for storing the second video, wherein the video compositing device is configured to composite the first video stored in the first video storage means and the second video stored in the second video storage means According to this video compositing device, videos are composited for each pixel.

According to this video output device, a video generated by compositing videos in units of pixels, is output.

### BRIEF DESCRIPTION OF THE DRAWINGS

The invention will be described with reference to the accompanying drawings, wherein like numbers refer to like units:

FIG. 1 shows a configuration of a video output device 1 according to an embodiment of the invention;

FIG. 2 shows a configuration of a video compositing processing unit 50;

FIG. 3 shows an example of a main video;

FIG. 4 shows an example of an OSD video;

FIG. 5 shows an example of a composite video;

FIG. 6 illustrates a table showing a data format of an OSD video;

FIG. 7 illustrates a table showing an example of a LUT stored in a palette storage unit 510;

FIG. 8 shows status transition of the video compositing processing unit 50; and

FIG. 9 shows status transition in a state OVERLAP in details.

### DESCRIPTION OF EXEMPLARY EMBODIMENTS

1. Configuration

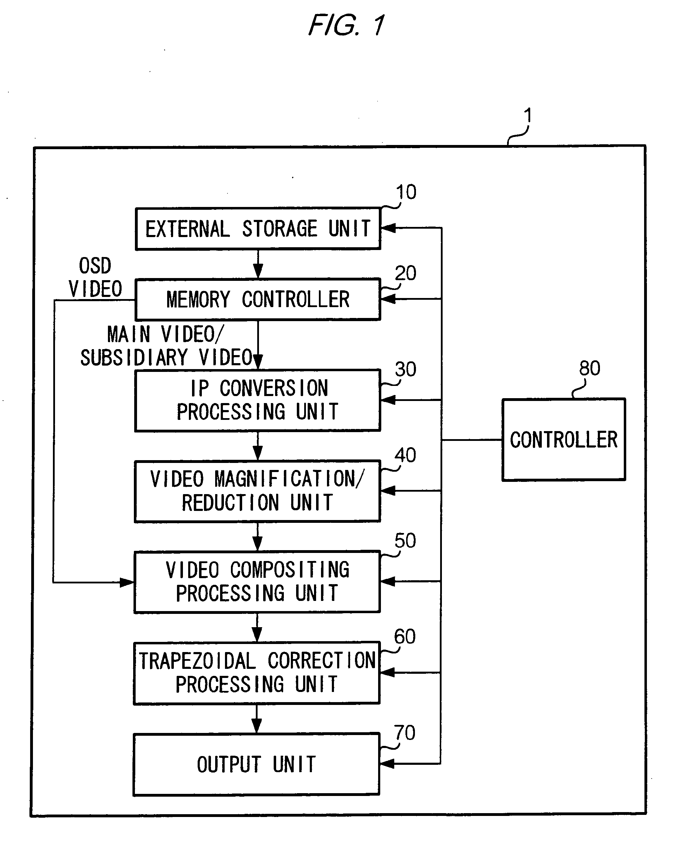

FIG. 1 shows a configuration of a video output device 1 according to one embodiment of the invention. In this embodiment, the video output device 1 is a projector. The video output device 1 carries out video processing operations in units of pixels, to composite a first video (e.g., a main video or subsidiary video) and a second video (e.g., an OSD video). The term "video" is intended to cover any of a still picture, a motion picture, and a combination of still and motion pictures. An external storage device 10 stores data expressing videos to be output or processed, such as a main video, subsidiary video, or OSD video. The main and subsidiary videos include plural pixels arranged in a matrix. In the main and subsidiary videos, each pixel includes data indicating a color according to a color coordinate system (such as an RGB color coordinate system). The OSD video also includes plural pixels arranged in a matrix. In the OSD video, each pixel includes color data expressed in a format (for example, of an index type) which requires a lesser volume of data than those of the main and subsidiary videos.

A memory controller 20 reads necessary data from the external storage device 10, and outputs the read data to other components. An IP (interlace/progressive) conversion processing unit 30 performs an interlace/progressive conversion process on the main or subsidiary video upon necessity. A video magnification/reduction processing unit 40 magnifies or reduces the main or subsidiary video. A video compositing processing unit 50 composites the main or subsidiary video with the OSD video, and generates a composite video. A trapezoidal correction unit 60 performs a trapezoidal correction process on the composite video, and generates an output video. An output unit 70 outputs the generated output video. A controller 80 controls respective components of the video output device 1. The controller 80 has a processor and a memory.

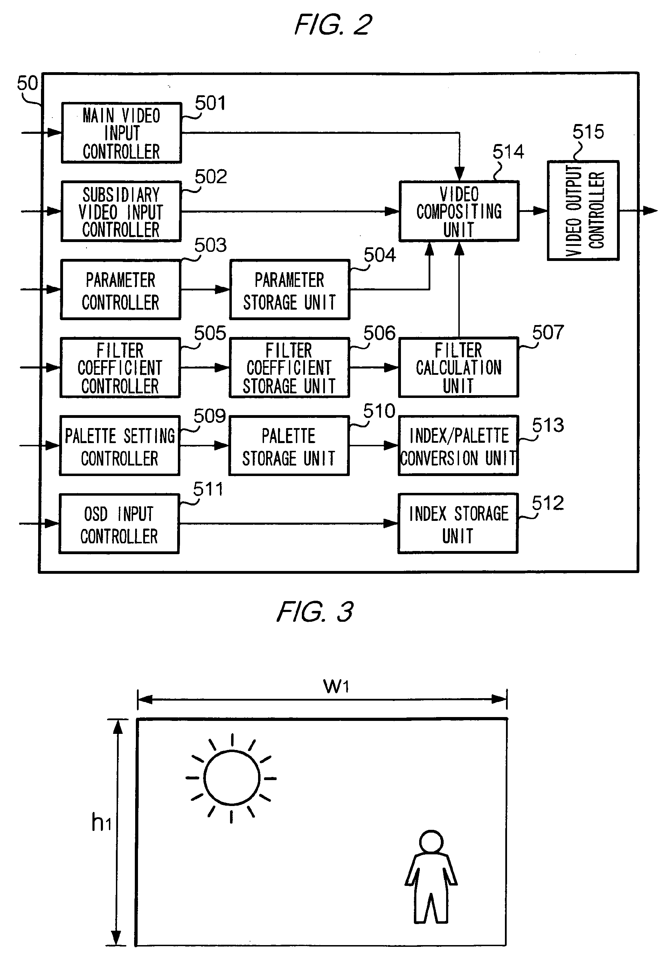

FIG. 2 shows a configuration of the video compositing processing unit 50. A main video input controller 501 monitors status of a video compositing unit 514 and controls input of a main video. The video compositing unit 514 outputs a busy signal to the main video input controller 501. When the busy signal indicates "True", the main video input controller 501 does not output data of a pixel as a processing target to the video compositing unit 514. That is, when the busy signal indicates "True", the main video input controller 501 outputs data of a pixel other than the pixel which is now the processing target, e.g., data of a pixel which a processing target immediately prior to the pixel which is now the processing target. Alternatively, the main video input controller 501 can output blank data to the video compositing unit 514 when the busy signal indicates "True". When the busy signal indicates "False", the main video input controller 501 outputs data of a pixel as a processing target to the video compositing unit 514. In fact, busy control is performed by the video compositing unit 514, which will be described later. The main video input controller 501 may be provided as a queue utilizing a ring buffer. The video compositing processing unit 50 and the video magnification/reduction processing unit 40 are connected via a bus, and the main video input controller 501 is a bus master. In a similar manner, a sub video input controller 502 monitors status of the video compositing unit 514 and controls input of a subsidiary video.

An OSD input controller 511 performs control for reading an OSD index video stored in the external storage device 10. The OSD input controller 511 is a bus master. The OSD input controller 511 outputs a read OSD index video to an index storage unit 512. The index storage unit 512 is a memory which stores the OSD index video. The index storage unit 512 has plural line buffers. The index storage unit 512 is provided to achieve a high processing speed. The index storage unit 512 can have an arbitrary capacity. The index storage unit 512 outputs, to an index/palette conversion unit 513, data of a pixel that is a processing target and pixels peripheral thereto , e.g., data of total five pixels constituted of a processing target pixel as a center and peripheral pixels each in the upper, lower, left, and right sides of the target pixel.

The index/palette conversion unit 513 converts the OSD index video into RGB data, based on the data stored in a palette storage device 510. The palette storage device 510 stores data for converting OSD indices into RGB data. Also, the palette storage device 510 stores data for converting OSD indices into transparency α. The data stored in the palette storage device 510 is updated by a palette setting controller 509. That is, the palette setting controller 509 performs setting of palettes under control of the controller 80 or, in other words, modifies the data in the palette storage device 510. The palette setting controller 509 is a bus slave. The index/palette conversion unit 513 outputs data of pixels, which have been converted into an RGB format, to a filter calculation unit 507.

The filter calculation unit 507 performs a filter calculation on pixel data obtained by index/palette conversion, using a filter coefficient stored in a filter coefficient storage unit 506. The filter coefficient storage unit 506 stores parameters such as filter coefficients used for filter calculations. Data stored in the filter coefficient storage unit 506 is set up by a filter coefficient controller 505. That is, the filter coefficient controller 505 performs setting of filter coefficients under control of the controller 80. The filter coefficient controller 505 is a bus slave.

The filter calculation unit 507 also monitors status of the video compositing unit 514 and controls input of an OSD video. The video compositing unit 514 outputs a busy signal to the filter calculation unit 507. When the busy signal indicates "True", the filter calculation unit 507 does not output data of a pixel as a processing target to the video compositing unit 514. When the busy signal indicates "False", the filter calculation unit 507 outputs pixel data subjected to a filter processing (described later), to the video compositing unit 514.

The video compositing unit 514 composites a main video, a subsidiary video, and an OSD video. The video compositing unit 514 composites videos in unit of pixels. The video compositing unit 514 also composites videos, based on parameters stored in a parameter storage unit 504. The parameter storage unit 504 stores parameters required for compositing videos. In this embodiment, the parameter storage unit 504 stores a main video width *w₁*, main video height *h₁*, OSD video width *w₂*, OSD video height *h₂*, OSD memory width *m*, OSD memory height *n*, composite video width *w₃*, composite video height *h₃*, horizontal position *x₁* of the main video, vertical position *y₁* of the main video, horizontal position *x₂* of the OSD video, vertical position *y₂* of the OSD video, and background color. Data stored in the parameter storage unit 504 is set up by a parameter controller 503. That is, the parameter controller 503 performs setting of parameters under control of the controller 80.

The video compositing unit 514 monitors status of a video output controller 515 and controls output of a composite video. The video compositing unit 514 outputs data of the composite video and an enable signal to the video output controller 515. The video output controller 515 monitors status of the trapezoidal correction processing unit 60 provided for use at a later stage of the system, and outputs the composite video upon necessity. In fact, busy control is carried out by the video compositing unit 514. The video output controller 515 can be provided in the format of a queue utilizing a ring buffer.

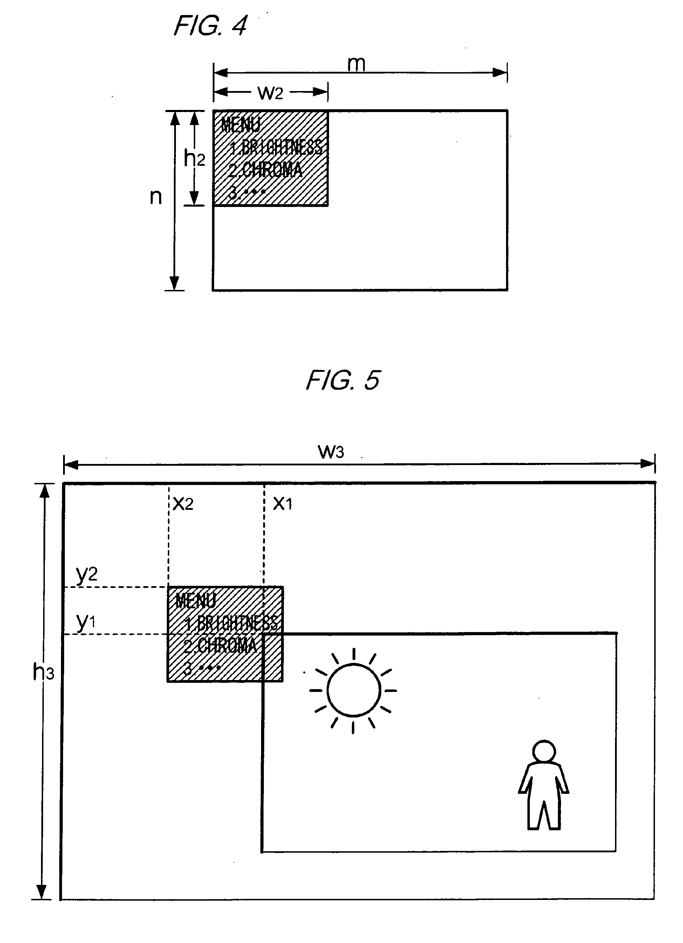

FIG. 3 shows an example of a main video. FIG. 4 shows an example of an OSD video. FIG. 5 shows an example of a composite video. Positions of pixels forming the composite video are expressed in accordance with an *x-y* Cartesian coordinate system. The main video has a height *h₁* and a width *w₁.* The OSD video has a height *h₂* and a width *w₂.* The composite video has a height *h₃* and a width *w₃.* In the composite video, the main video is located, for example, where the upper left apex of the main video is positioned at (*x₁, y₁*). The OSD video is located, for example, where the upper left apex of the OSD video is positioned at (*x₂*, *y₂*).

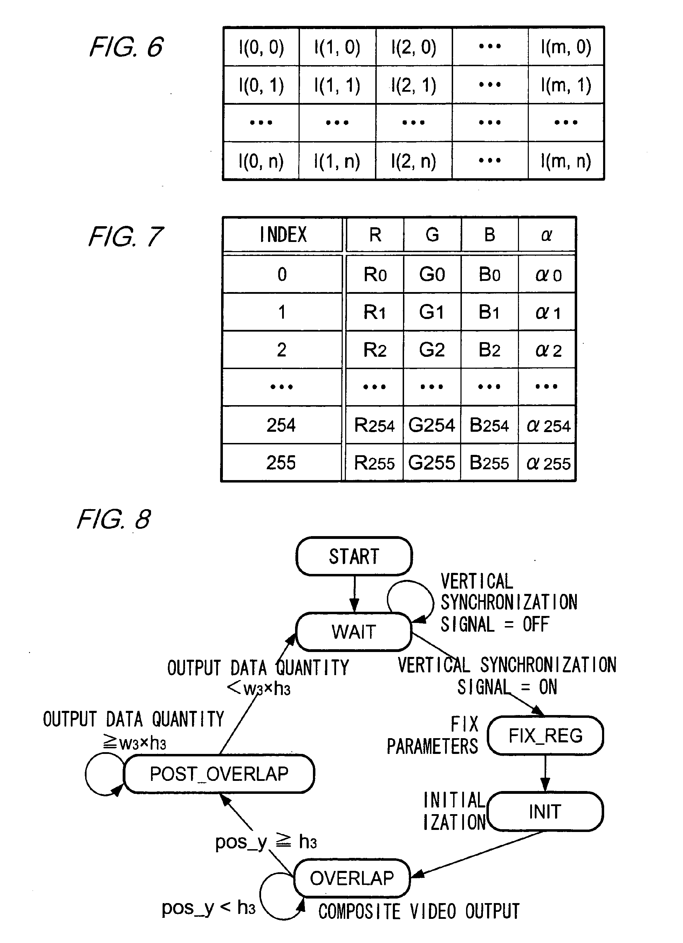

FIG. 6 shows a data format of the OSD video. The external storage device 10 has a storage area formed in an *m* × *n* matrix, as an area for storing the OSD video (hereinafter referred to as an "OSD memory"). Cells of the matrix respectively correspond to pixels. OSD video data is stored in an index format. Data of the index format designates colors stored in a palette (or LUT: Look Up Table) which will be described later. That is, OSD video data is a type of data, e.g., 8-bit data, which includes a smaller data volume than RGB format data.

FIG. 7 shows an example of a LUT stored in the palette storage device 510. The LUT includes plural data sets, or 256 data sets in this case, each of which includes an index value, values of R, G, and B color components corresponding to the index value, and a value of transparency α also corresponding to the index value. For example, for an index OSD_PALETTE = 0, values of the color components are given as (R, G, *B*) = (*R₀, G₀, B₀*). Correspondingly, for the same index, α = α₀ is given.

2. Operation

Operation of the video output device 1 will be outlined below. A main video or subsidiary video is supplied to the video compositing processing unit 50 after the IP conversion processing and magnification/reduction processing have been performed. An OSD video is supplied directly to the video compositing processing unit 50. The video compositing processing unit 50 composites the main or subsidiary video with the OSD video. A composite video is subjected to a trapezoidal correction processing and is then output. The following description will be directed to a video composite processing of the video compositing processing unit 50 and particularly to operation of the video compositing unit 514 as an internal module.

FIG. 8 shows transition of status of the video compositing unit 514. In a state WAIT, the video compositing unit 514 maintains the state WAIT when a vertical synchronization signal is off. When the vertical synchronization signal is turned on, the video compositing unit 514 then transits to a state FIX_REG.

In the state FIX_REG, the video compositing unit 514 fixes parameters used for compositing videos. The parameters are set up by the controller 80. After the parameters are fixed, the video compositing unit 514 transits to a state INIT.

In the state INIT, the video compositing unit 514 performs an initialization processing. The video compositing unit 514 firstly sets the horizontal position *pos_x* of a pixel as a processing target and the vertical position *pos_y* of the pixel as a processing target to (*pos_x, pos_y*) *=* (0, 0). Further, the video compositing unit 514 performs busy control, based on initialized coordinates. Busy control is the same as will be described below. After carrying out the foregoing processes, the video compositing unit 514 transits to a state OVERLAP.

In the state OVERLAP, the video compositing unit 514 determines a value of a busy signal to be output to the main video input controller 501, based on the pixel (*pos_x, pos_y*)*.* That is, if the pixel (*pos_x, pos_y*) includes a part of the main video, the video compositing unit 514 determines the value of the busy signal to be "False". If the pixel (*pos_x, pos_y*) does not include a part of the main video, the video compositing processing unit 50 determines the value of the busy signal to be "True". When the busy signal indicates True, the main video input controller 501 does not output data of the pixel (*pos_x, pos_y*) to the video compositing processing unit 50. When the busy signal indicates False, the main video input controller 501 outputs data of the pixel *(pos_x, pos_y)* of the main video to the video compositing processing unit 50.

Further, the video compositing unit 514 determines a value of a busy signal to be output to the filter calculation unit 507, based on the pixel *(pos_x, pos_y).* That is, if the pixel *(pos_x, pos_y)* includes a part of the OSD video, the video compositing unit 514 determines the value of the busy signal to be "False". If the pixel (*pos_x, pos_y*) does not include a part of the ODS video, the video compositing unit 514 determines the value of the busy signal to be "True". When the busy signal indicates True, the filter calculation unit 507 does not output data of the pixel (*pos_x, pos_y*) to the video compositing unit 514. When the busy signal indicates False, the filter calculation unit 507 outputs data of the pixel (*pos_x,pos_y*) of the OSD video to the video compositing unit 514.

Further, the video compositing unit 514 determines "False" as a value of an enable signal to be output to the video output controller 515. When the enable signal indicates False, the video output controller 515 does not output data of the pixel *(pos_x, pos_y*) of the composite video. After completion of the processes described above, the video compositing unit 514 transits to a state POST_OVERLAP, and returns to the state WAIT after completely outputting all data.

In the state OVERLAP, the video compositing unit 514 outputs a composite video. An explanation of this process is given below.

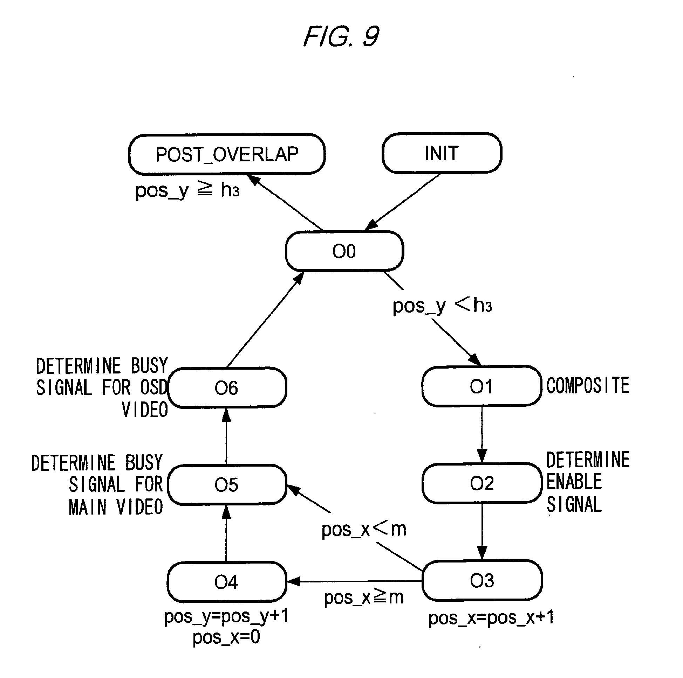

FIG. 9 is a status transition diagram showing details of the state OVERLAP. In a state O0, the video compositing unit 514 transits to a state POST_OVERLAP if the coordinate *pos_y* satisfies *pos_y ≥ n,* i.e., when processing for one screen is completed. The video compositing unit 514 transits to a state O1 if the coordinate *pos_y* satisfies *pos_y < n.*

In the state O1, the video compositing unit 514 composites the main video with the OSD video about the pixel (*pos_x, pos_y*) to generate the composite video.

In the state 02, the video compositing unit 514 sets an enable signal to be output to the video compositing unit 514 to "True". When the enable signal indicates True, the video output controller 515 outputs data of the pixel (*pos_x, pos*_*y*) of the composite video. If the pixel (*pos_x, pos_y*) includes neither part of the main video nor part of the OSD video, the color of the pixel (*pos_x, pos_y*) is set to the background color.

In the state 03, the video compositing unit 514 updates the coordinate *pos_x* with *pos_x = pos_x* + 1. If the coordinate *pos_x* satisfies *pos_*x ≥ m, i.e., when processing for one line is completed, the video compositing unit 514 transits to a state 04. If the coordinate *pos_x* satisfies *pos_x < m,* i.e., when processing for one line is still incomplete, the video compositing unit 514 transits to a state O5.

In the state 04, the video compositing unit 514 updates the coordinates *pos_x* and *pos_y* respectively with *pos_x* = 0 and *pos_y = pos_y +* 1, and then goes to the state O5.

In the state O5, the video compositing unit 514 determines a value of a busy signal to be output to the main video input controller 501, based on the pixel (*pos_x, pos_y*)*.* That is, if the pixel (*pos_x, pos_y*) includes a part of the main video, the video compositing unit 514 determines the value of the busy signal to be "False". If the pixel (*pos_x, pos_y*) includes no part of the main video, the video compositing unit 514 determines the value of the busy signal to be "True". After determining the value of the busy signal, the video compositing unit 514 transits to a state 06.

In the state 06, the video compositing unit 514 determines the value of the busy signal to be output to the filter calculation unit 507, based on the pixel *(pos_x, pos_y).* That is, if the pixel *(pos_x, pos_y)* includes a part of the OSD video, the video compositing unit 514 determines the value of the busy signal to be "False". If the pixel *(pos_x, pos* _y) includes no part of the main video, the video compositing unit 514 determines the value of the busy signal to be "True". After determining the value of the busy signal, the video compositing unit 514 transits to the state O0, i.e., reverts to the OVERLAP state.

Description will now be made referring again to FIG. 8. In the state POST_OVERLAP, the video compositing unit 514 transits to the state WAIT if the quantity of output items of data is smaller than a product of the width *w₃* and height *h₃* of the composite video, i.e., if the quantity of items of output data satisfies output data quantity < *h₃* × *w₃*. The video compositing unit 514 maintains the state POST_OVERLAP if the quantity of output data is not smaller than the product of the width *w₃* and height *h3* of the composite video, i.e., if the quantity of output items of data satisfies output data quantity ≥ *h₃* × *w*₃.

As has been described above, a main video and an OSD video are composited. The above embodiment has been described referring to a case of compositing only a main video and an OSD video. However, compositing is carried out in the same manner even in another case of compositing three videos, e.g., a main video, a subsidiary video, and an OSD video. According to the above embodiment, videos are composited in units of pixels, and so, compositing can be achieved without a large volume of memory, such as line buffers. Although the video compositing processing unit 50 has an index storage unit 512, this unit 512 is a memory used for filtering processes but is not used for compositing videos. Since processing is executed in units of pixels, processing loads in later stages will be reduced. Further, the filtering processes are not effected on a composite video but are effected on the OSD video, i.e., a video before being subjected to compositing. Therefore, proper filtering processes can be executed in consistence with video characteristics. If a projector is used as a video output device as described above, a trapezoidal correction processing is required at a later stage. Since high-frequency videos are often used as OSD videos, an anti-alias processing is required. Even in this case, the above embodiment is capable of performing proper filtering processes in consistence with video characteristics, so that higher image quality can be achieved. In addition, each OSD video is stored in an index/palette format and therefore requires a less stored data volume. Furthermore, the video compositing processing unit 50 has horizontal and vertical filters which are capable of more flexibly changing the video quality compared with a configuration of having only a horizontal filter.

3. Further Embodiments

The invention is not limited to the embodiment described above, but may be variously modified in practical phases. In the following description, elements common to the above embodiment will be denoted by common reference symbols. Two or more of the modifications described below may be combined together.

The number of videos which is composited is not limited to three. Two videos or three or more videos may be composited. Videos to be composited need not always include an OSD video. An ordinary video may be composited instead. The data format of the OSD video is not limited to an index/palette format but may be an RGB format. Applicable color coordinate systems are not limited to an RGB color coordinate system. A different color coordinate system such as a YUV, CMYK, or L*a*b* color coordinate system may be utilized.

Parameters stored in the parameter storage unit 504 are not limited to those described in the above embodiment; other parameters may be used. The parameter storage unit 504 need not store all the parameters described in the above embodiment. The parameter storage unit 504 needs only to store at least a parameter which indicates a relative positional relationship between a main video and an OSD video.

The video compositing processing unit 50 may omit part or all of the filter coefficient controller 505, filter coefficient storage unit 506, filter calculation unit 507, palette setting controller 509, palette storage unit 510, and index/palette conversion unit 513. For example, if an OSD video of an index/palette format is not used but an OSD video of a RGB format is used, the OSD input controller 511 may output data of the OSD video directly to the video compositing unit 514. Alternatively, even in case of an OSD video of an index/palette format, the filter coefficient controller 505, filter coefficient storage unit 506, and filter calculation unit 507 may be omitted from the video compositing processing unit 50. In this case, the index/palette conversion unit 513 monitors status of the video compositing unit 514 and controls the input OSD video.

The video compositing processing unit 50 may omit the index storage unit 512. In this case, the video compositing processing unit 50 includes none of the filter coefficient controller 505, filter coefficient storage unit 506, and filter calculation unit 507. The OSD input controller 511 outputs, pixel by pixel, data of the OSD video to the index/palette conversion unit 513. The index/palette conversion unit 513 monitors status of the video compositing unit 514 and controls input of the OSD video.

The filter calculation unit 507 may perform only one of vertical and horizontal filter processing. Pixels to be subjected to filter processing are not limited to pixels adjacent to a pixel as a processing target. A predetermined number of pixels arranged in a predetermined direction (e.g., a vertical or horizontal direction) from a pixel as a processing target may be subjected to filter processing.

The above embodiment has been described referring to an example of performing a filter processing on only the OSD video. However, the filter processing may be performed on either the main or subsidiary video. Further, filter processing can be performed on not only videos before being composited but also a composite video.

In the palette storage unit 510, the LUT need not store the transparency α. Alternatively, the LUT may store any other parameter concerning display of pixels.

The configuration of the video output device 1 is not limited to that shown in FIG. 1. The video output device 1 may have any configuration insofar as the video output device 1 composites at least two input videos and outputs a composite video. For example, all or part of a main video, subsidiary video, and OSD video may be provided from another device via a network. Further, the IP conversion processing and trapezoidal correction processing may be omitted. Alternatively, video processing other than the foregoing processing may be carried out.

The above embodiment has been described referring to an example in which the video output device 1 is a projector. However, the video output device 1 is not limited to a projector. In place of a projector, the video output device 1 may be a brown tube display, liquid crystal display, plasma display, or any other dot display.

## Claims

1. A video compositing device, comprising:
first video input means for inputting a first video;
second video input means for inputting a second video;
parameter input means for inputting a parameter indicating a relative positional relationship between the first video input by the first video input means and the second video input by the second video input means when the first and second videos are composited;
video compositing means for compositing the first and second videos, in units of pixels, in accordance with the parameter input by the parameter input means, to generate a composite video; and
output means for outputting a composite video generated by the video compositing means.

2. The video compositing device according to Claim 1, further comprising
filter processing means for performing a filter processing on the second video,
wherein the video compositing means is configured to composite the first video and the second video which has been subjected to the filter processing by the filter processing means.

3. The video compositing device according to Claim 1, the second video being expressed in a data format which requires a smaller data volume than a data format of the first video, and the video compositing device further comprising:
conversion information storage means for storing conversion information for converting the data format of the second video into the data format of the first video; and
conversion means for converting the data format of the second video into the same data format as the data format of the first video, based on the conversion information stored in the conversion information storage means.

4. The video compositing device according to Claim 1, further comprising
pixel storage means for storing data of at least five pixels of the video input by the second video input means, including a processing target pixel as a processing target and adjacent pixels vertically and horizontally adjacent to the processing target pixel,
wherein the filter processing means is configured to perform the filter processing in two directions, horizontal and vertical to the processing target pixel, using the data stored in the storage unit.

5. A video output device, comprising:
the video compositing device according to one of Claims 1 to 4;
first video storage means for storing the first video; and
second video storage means for storing the second video,
wherein the video compositing device is configured to composite the first video stored in the first video storage means and the second video stored in the second video storage means.
